# EUROPEAN PATENT SPECIFICATION

(11) **EP 0 784 717 B1**
(45) Date of publication and mention of the grant of the patent: **02.10.2002**
(21) Application number: 95918343.5
(22) Date of filing: 01.05.1995
(51) Int. Cl.: D04B 9/06, D03D 3/00, B32B 7/00, D04B 21/14

(54) **FLEXIBLE MATERIAL FOR USE IN AN INFLATABLE STRUCTURE**
FLEXIBLES MATERIAL ZUR VERWENDUNG IN IN EINER AUFBLASBAREN STRUKTUR
MATERIAU SOUPLE DESTINE A ETRE UTILISE DANS UNE STRUCTURE GONFLABLE

(30) Priority: 30.09.1994 US 315531
(43) Date of publication of application: 23.07.1997
(73) Proprietor: Lockheed Martin Corporation, Bethesda, MD 20817 (US)
(72) Inventor: CUCCIAS, Robert, S., Woodland Hills, CA 91367 (US)
(74) Representative: Charlton, Peter John
(86) International application number: US9505383
(87) International publication number: WO96010666

(56) References cited:
- DE-A- 3 702 936
- US-A- 4 518 640
- US-A- 4 615 934
- US-A- 4 948 658
- US-A- 5 118 558
- US-A- 5 275 434
- US-A- 5 399 418

## Description

The invention is directed to the field of flexible materials and, in particular, to the field of flexible composite materials. The material has direct application to inflatable structures such as the gas bag for lighter-than-air vehicles.

### Description of Related Art

In large non-rigid lighter-than-air vehicles, the material used for the gas bag must meet a large number design requirements such as high strength, provide tear resistance, act as a gas barrier, not be subject to degradation by the environment including ultra violet radiation due to exposure to sunlight. Thus such a material winds up being a multi-layer laminate combining materials with diverse properties as known from US-A-5 118 558. The primary axial loads on any portion of the wall of the gas bag are at 0 degrees to the longitudinal axis of the gas bag and at 90 degrees thereto (circumferential). Thus most laminates include woven filamentary material with the filamentary material orientated at the 0 and 90 degree angles. Additionally, to carry shear loads, filamentary material is sometimes included with orientations at plus or minus 45 degrees to those carrying the axial loads.

In early designs, where stress levels were low, several layers of woven cotton cloth impregnated with rubber to provide the gas seal were often used. Later, artificial fibers such as RAYON™ or DACRON^{AM} were used, manufactured by the E. I. duPont de Nemours & Company (hereinafter referred to as "DuPont"). The layers of cotton cloth were at 0 and 90 degrees (axial or strength plies) for the tension loads and plus and minus 45 degrees (bias plies) for the shear loads. However, this approach did not always result in an optimal strength design for the strength required to carry the shear loading was typically, much less than the capability of the bias plies. Using the same material for both the axial tension loads as well as the bias (shear) loads often resulted in a weight penalty.

Some modem designs use a woven polyester fiber such as DACRON™ for the 0 and 90 degrees axial load carrying material. A film of material that is impervious to Helium such as a polyester terephthalate that serves as the gas barrier is also carries some shear load. A typical polyester terephthalate is sold by DuPont under the trade name MYLAR™. Woven polyester fiber such as DACRON™ has a very large strain to failure value, about 20 percent. However, in large non-rigid airships, the strength requirements have dictated the use of very high strength materials such as a liquid crystal thermotropic (melt spun) polyester polyarylate fiber, for example VECTRAN™ manufactured by Hoechst Celanese, Germany to carry the axial loads. Another high strength material is a lyotropic (solvent spun) aromatic polyaramide fiber, such as KEVLAR™, which is manufactured by DuPont. However, both VECTRAN™ and KEVLAR™ have a very small value of strain to failure value, on the order of 4 percent. If the bias layers where made of the same material, biaxial loading in the 0 and 90 degree fibers will transfer significant load to the 45 degree bias layers. Requiring these layers to work as hard as the 0 and 90° plies, introduces a potential failure mode, or a weakening of the system. In fact having a bias layer with higher elongation than the 0 and 90 degree (strength fibers) precludes premature failure in the bias ply at ultimate load in the strength fibers.

Some of the prior art teaches away from the use of such a concept, for example, German Patent No. DE 3702936 "Fiber Composite Material-With high Tensile And High Modulus Fiber In different Orientations by S. Roth, et al. Roth, et al. teaches the use of fibers with high strength and elongation at 0 and 90 degrees in conjunction with 45 degree fibers that have a high elastic modulus for use in rigid composite structures. Thus the strain value at failure of the plus or minus 45 degree fibers is less than of the 0 and 90 degree fibers.

In U.S. Patent No. 4,770,918 "Diaphragm For Producing Sound" by A. Hayashi a flexible diaphragm for producing sound is disclosed having at least one layer of a first woven fabric having a low elongation and at least two layers of a second woven fabric having a high elongation. The first and second fabrics are disposed in such a fashion that the warps thereof cross each other at between 10 and 80 degrees whereby an elongation of the diaphragm in the direction of the warps of the first fabric is generally equal to the elongation of the diaphragm in a direction inclined at a 45 degree angle relative to the direction of the warps of the first fabric. This allows for ease of tuning of the diaphragm. This invention, of course, would produce an inefficient pressurized structure.

Other patents of general interest wherein materials of different properties are combined into a single flexible structure are U.S. Patent Nos. 5,189,280 "Three Dimensional Fiber Structures Having Improved Penetration Resistance" by G.A. Harpell, et al., 4,871, 598 "Container With Flexible Walls" by E. Potente, et al. and 5,215,795 "Shock-Absorbing Air Bag" by M. Matsumoto, et al.

DE-A-3702936 discloses a fiber reinforced composite material for use in airplane manufacturing and consist of high strength fibers especially carbon fibers. The material consists of a multi-directional laminate with fibers orientated at 0°, ±45°, and 90°. The fibres orientated at 0° and 90° have high tensile breaking strength. The fibers with ±45° orientation have high stiffness (Elastic Modulus). The tolerance for the given fiber orientations is ±15°.

Thus it is primary object of the invention to provide a laminate material suitable for the wall of flexible pressurized containers.

It is a another primary object of the invention to provide a laminate material suitable for the wall of a flexible pressurized containers wherein bias shear load carrying plies have a greater strain to failure value than the axial tension load carrying plies.

It is a further object of the invention to provide a laminate material suitable for the flexible wall pressurized containers that is riot degraded by ultra violet radiation.

It is a still further object of at least one embodiment of the invention to provide a laminate material suitable for the wall of flexible pressurized containers that are suitable for containing Helium gas.

It is another object of at least one embodiment of the invention to provide a laminate material suitable for the wall of flexible pressurized containers that can easily be seamed together.

### SUMMARY OF INVENTION

The invention is a material suitable for use as the wall of a pressurized container such as the gas bag of a lighter-than-air vehicle. In detail, the invention provides a flexible laminated high strength, tear resistant, gas impermeable, ultra-violet radiation and wind resistant wall material for lighter-than-air vehicles and the like, the material having interior and exterior exposed surfaces and including multiple bonded layers intermediate said interior and exterior exposed surfaces, the material comprising:
a) a first layer of bonding resin providing said interior exposed surface;
b) at least one first layer of material having individual strands at 0° and 90° bonded to said first layer of bonding resin;
c) at least one second layer of material having individual strands at plus and minus 45°, said at least one second layer having a strain-at failure value greater than said at least one first layer;
d) securing mens for securing said at least one first and at least one second layers together;
e) a second layer of bonding resin;
f) a layer of gas impermeable material, said second layer of bonding resin bonding said layer of gas impermeable material to said at least one second layer of high strain woven material;
g) a layer of ultra-violet radiation and wind resistant material; and
h) a third layer of resin bonding said layer of ultra-violet radiation and wind resistant material to said gas impermeable material, said exterior exposed surface being provided by the UV-resistant layer.

Critical to the invention is that the strain value at failure for the filamentary material of the second layer must be greater than for the 0 and 90 degree filamentary material of the first layer. The first and second layers are bonded together by resin. The first and second plies can also be knitted or stitched together with or without the resin to add additional strength. Preferably, an additional film of a gas impermeable material and an ultra violet radiation resistant material are bonded to the first two layers.

The novel features which are believed to be characteristic of the invention, both as to its organization and method of operation, together with further objects and advantages thereof, will be better understood from the following description in connection with the accompanying drawings in which the presently preferred embodiments of the invention are illustrated by way of examples. It is to be expressly understood, however, that the drawings are for purposes of illustration and description only and are not intended as a definition of the limits of the invention.

### BRIEF DESCRIPTION OF THE DRAWINGS

Figure 1 is a perspective view of a lighter-than-air vehicle.
Figure 2 is a perspective view of a portion of the wall of the gas bag made of flexible fabric laminate illustrating the main axis of filamentary material alignment.
Figure 3 is a partial perspective view of a portion of the fabric laminate wherein the first and second layers are woven materials.
Figure 4 is a partial side view of a second embodiment of the fabric laminate wherein the filamentary material making up both the first and second layers are unidirectional plies that are stitched together.
Figure 5 view of a third embodiment of the fabric laminate perpendicular thereto wherein the filamentary material making up both the first and second layers are unidirectional plies that are knitted together.
Figure 6 is a side view of the third embodiment of the fabric laminate illustrated in Figure 5.
Figure 7 is a graph plotting the strength of the 0 and 90 degree fiber as a function of the ratio of the strain rate at failure of the 0 and 90 degree fiber to the plus or minus 45 degree fiber.

### DESCRIPTION OF THE PREFERRED EMBODIMENT

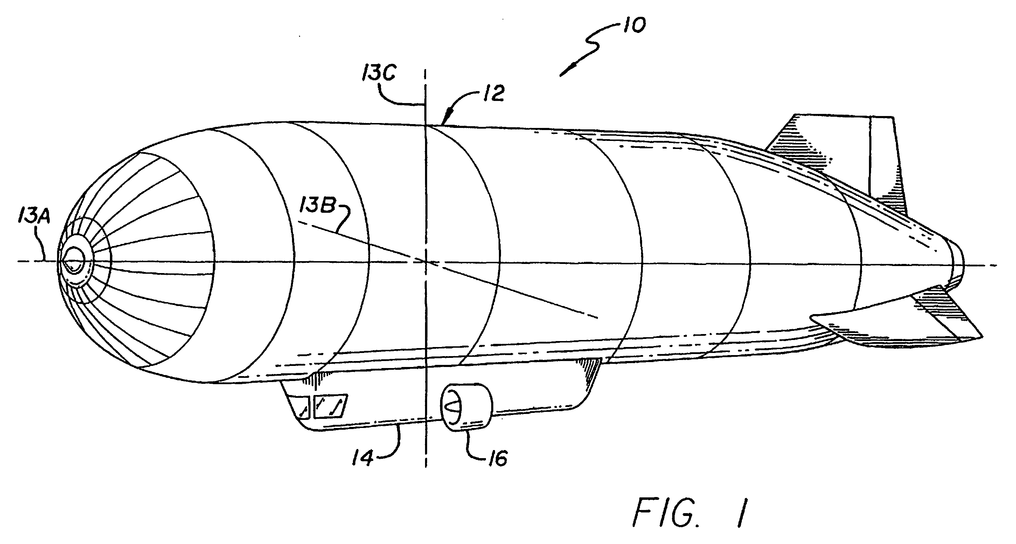

Illustrated in Figure 1 is a perspective view of a lighter-than-air vehicle, generally designated by numeral 10. The vehicle 10 includes a gas bag 12 having a longitudinal axis 13A, lateral axis 13B and a vertical axis 13C. A gondola 14 is suspended from the gas bag and which incorporates a plurality of propulsion systems 16 mounted thereon. As the vehicle increases in size, large stress levels are introduced into the gas bag 12. Additionally, the gas bag 12 should preferably be: impervious to Helium gas; not be effected by the environment (including ultra-violet radiation); capable of being seamed; and be damage tolerant. Meeting all these requirements requires a laminated multi-layer flexible cloth made of different materials having specific mechanical properties.

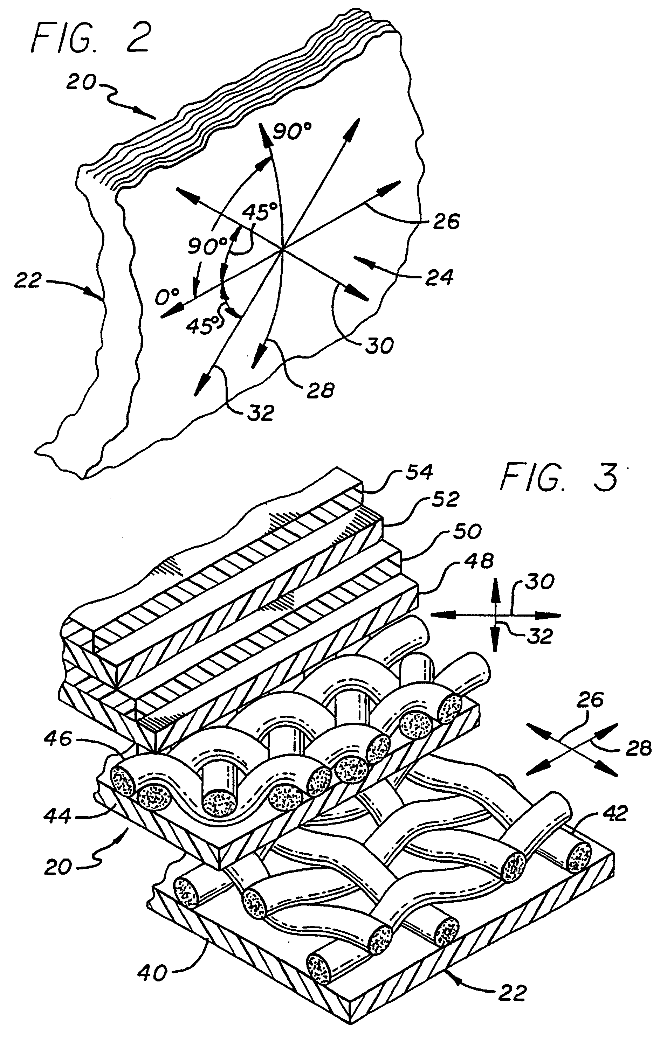

In Figure 2, a portion of the flexible wall 20 is illustrated having an inside surface 22 and outside surface 24 and is composed of multiple layers of filamentary material in a manner to be subsequently discussed. The main axial loads are introduced along the 0 degree axis, aligned with the longitudinal axis 13A, and indicated by numeral 26, and 90 degrees thereto indicated by numeral 28. Thus the main load carrying filamentary material is aligned with these axis. Shear loads are carried by filamentary material aligned with the plus and minus 45 degree directions indicated by numerals 30 and 32. The angle of 45 degrees can be adjusted based upon the detail requirements of the specific application.

Referring to Figure 3 the flexible wall 20 is made of (starting from interior surface 22) a first layer of resin 40 that is bonded to a first layer 42 of woven yam with individual strands at 0 and 90 degrees. The resin layer 40 and subsequent layers of resin are, preferably, a polyurethane. The first layer 42 is made of a high strength yam such as liquid crystal thermotropic (melt spun) polyester polyarylate fiber (VECTRAN™). A lyotropic (solvent spun) aromatic polyaramide fiber (KEVLAR™) is also suitable. A second layer of resin 44, separates the first layer 42 from a second layer 46 of woven filamentary material with individual strands at plus or minus 45 degrees. A third layer of resin 48 separates the second layer 46 from a film 50 of material that is substantially impetious to Helium gas such as polyester terephthalate (MYLAR™) Finally a fourth layer of resin 42 is used to bond an outer layer 54 of a material that is resistant to degradation by ultra violet radiation and also provides protection from wind erosion and the like. Such a material is a polyvinyl fluoride fiber, which is sold under the trade name TEDLAR™ by DuPont. As illustrated in Figure 3, the material is illustrated in its "lay up form". An altemative to MYLAR™ or TEDLAR™ is to increase the resin content of the laminate so as to impregnate the fibers creating a gas impermeable layer.

The critical factor in the selection of materials for the gas bag wall 20, besides being chemically compatible, is that the strain cm per cm or (inch per inch) at failure of the second layer of filamentary material be greater than the strain at failure for the first layer. This will insure that the strains introduced by the 0 and 90 degrees axial loads into layer 42 do not create failures when transferred into the layer 46. Furthermore, having a high strain rate material for the second layer 46 is very desirable in that it reduces the possibility of local stress concentrations

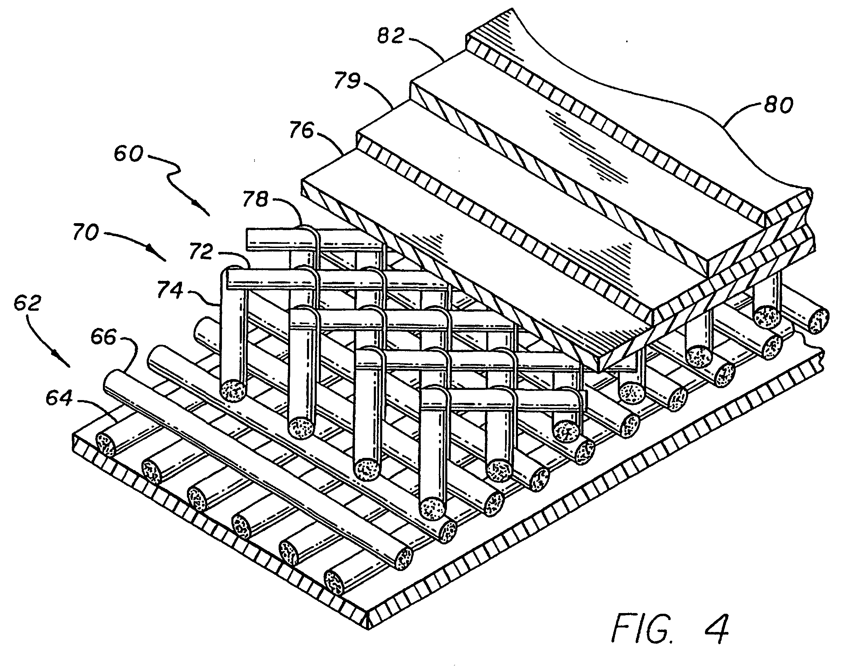

In Figure 4 a second embodiment of the subject material is illustrated and indicated generally by numeral 60. Starting from the bottom up, the material comprises a first layer of resin 61; a first layer 62 having a unidirectional filamentary material ply 64 at 0 degrees and a ply 66 at 90 degrees; a second layer 70 having a unidirectional filamentary material ply 72 at plus 45 degrees and a second ply 74 at minus 45 degrees. The four plies 62, 64, 72 and 74 are stitched together, with the stitches indicated by numeral 78. A Helium gas barrier layer of material such as MYLAR™ layer 79 is bonded thereover by the resin layer 76 and a final layer 80 a ultra violet radiation resistant material such as of TEDLAR™ is bonded by means of a resin layer 82. As in the first embodiment illustrated in Figure 3, when the individual layers are bonded together, the first and second layers, 62 and 70, respectively, become encapsulated in a flexible resin matrix. It should be noted that the woven or weaved first and second layers of material 42 and 46, respectively illustrated in Figure 3 could also be stitched together.

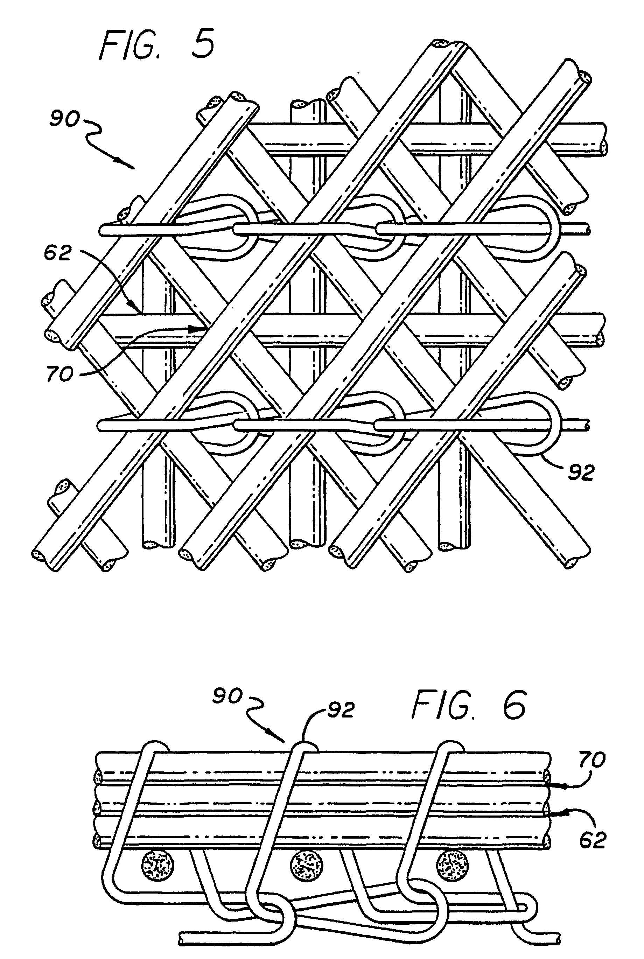

In Figures 5 and 6 a third embodiment is illustrated, generally indicated numeral 90 wherein the first and second layers 62 and 70 shown in Figure 4 are knitted together as indicated by numeral 92. The remainder of the material 90 would be similar to Figure 4. Again, it should be noted that the woven or weaved first and second layers of material 42 and 46, respectively illustrated in Figure 3 could also be knitted together to improve strength.

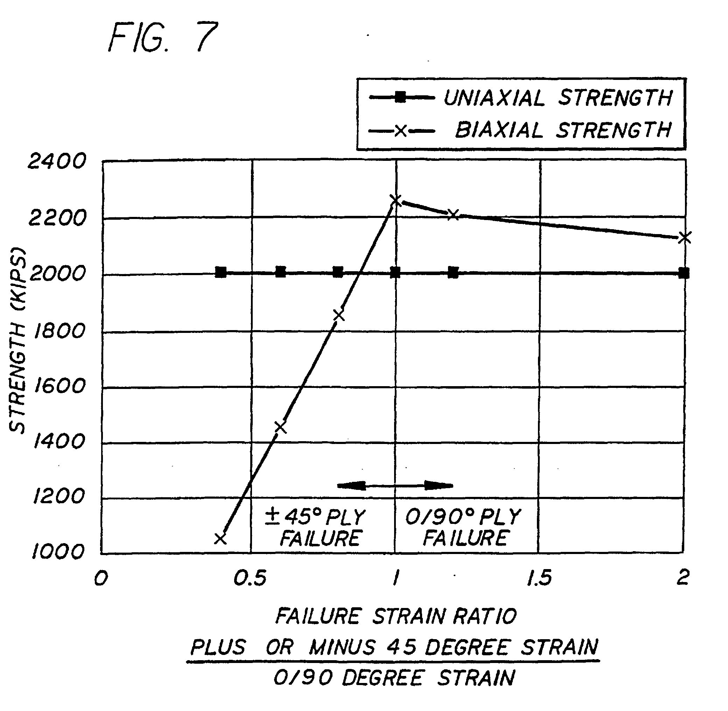

As previously mentioned it is critical to the invention that the strain value at failure for the filamentary material in the second plus or minus 45 layer must be greater than the 0 and 90 degree filamentary material for the first layer. Figure 7 demonstrates the importance of this feature. The strength of the material under both uniaxial and biaxial loading conditions is shown with a series of different strain values for the biaxial material. The biaxial material strain to failure is divided by the 0 and 90 degree material strain to failure to produce a strain ratio. If the ratio is less than one the plus or minus 45 degree bias layer will fail first, a ratio greater than one means the 0 and 90 degree layer will fail first. The severe penalty for low ratio's is obvious.

While the invention has been described with reference to a particular embodiments, it should be understood that the embodiments are merely illustrative as there are numerous variations and modifications which may be made by those skilled in the art. Thus, the invention is to be construed as being limited by the scope of the appended claims.

### INDUSTRIAL APPLICABILITY

The invention has applicability to the composites industry and also to the aircraft industry.

## Claims

1. A flexible laminated high strength, tear resistant, gas impermeable, ultra-violet radiation and wind resistant wall material (20, 60) for lighter-than-air vehicles and the like, the material having interior and exterior exposed surfaces and including multiple bonded layers intermediate said interior and exterior exposed surfaces, the material comprising:
a) a first layer of bonding resin (40, 61) providing said interior exposed surface;
b) at least one first layer of material (42, 70) having individual strands at 0° and 90° bonded to said first layer of bonding resin (40, 61);
c) at least one second layer (46, 70) of material having individual strands at plus and minus 45°, said at least one second layer (46, 70) having a strain-at failure value greater than said at least one first layer (42, 70);
d) securing means (44, 78) for securing said at least one first and at least one second layers together;
e) a second layer (48, 76) of bonding resin;
f) a layer (50, 79) of gas impermeable material, said second layer (48, 76) of bonding resin bonding said layer (50, 79) of gas impermeable material to said at least one second layer (46, 70) of high strain material;
g) a layer (54, 80) of ultra-violet radiation and wind resistant material; and
h) a third layer (52, 82) of resin bonding said layer (54, 80) of ultra-violet radiation and wind resistant material to said gas impermeable material (50, 79), said exterior exposed surface being provided by the UV-resistant layer (54, 80).

2. A flexible laminated material as in claim, wherein said first, second and third layers of bonding resin are polyurethane resin.

3. A flexible laminated material as in claim 1 or 2, wherein said securing means (44) for bonding said at least one first and said at least one second layers of woven material is a polyurethane resin.

4. A flexible laminated material as in claim 1 or 2, wherein said securing means (78) for bonding said at least one first and said at least one second layers woven material is stitching.

5. A flexible laminated material as in claim 1 or 2, wherein said securing means (78) for bonding said at least one first and said at least one second layers of woven material is knitting.

6. A flexible laminated material as in any preceding claim, wherein said at least one first layer of woven material (42, 70) is fiber taken from the group consisting of melt spun and solvent spun fibers.

7. A flexible laminated material as in any preceding claim, wherein said gas impermeable material is a polyester terephthlate.

8. A flexible laminated material as in any preceding claim, wherein said ultra-violet radiation and wind resistant material layer (54, 80) is polyvinyl fluoride.

9. A flexible laminated material as in claim 6, wherein said melt spun or solvent spun fibers are polyester polyarylate and aromatic polyaramide fibers respectively.

## Patentansprüche

1. Flexibles laminiertes, hochfestes, rissbeständiges, gasundurchlässiges, ultraviolettstrahlungs- und windbeständiges Wandmaterial (20, 60) für leichter-als-Luft Fahrzeuge und dergleichen, wobei das Material freiliegende Innen- und Außenseiten aufweist und zwischen den freiliegenden Innen- und Außenseiten mehrere verbundene Schichten enthält, wobei das Material aufweist:
a) eine erste Schicht aus Bindeharz (40, 61), die die freiliegende Innenseite bildet;
b) zumindest eine erste Schicht aus Material (42,70), das einzelne Stränge bei 0° und 90° hat, die an die erste Schicht aus Bindeharz (40, 61) gebunden sind;
c) zumindest eine zweite Schicht (46,70) aus Material, das einzelne Stränge bei plus und minus 45° hat, wobei die zumindest eine zweite Schicht (46, 70) einen Bruchdehnungswert hat, der größer als der der zumindest einen ersten Schicht (42, 70) ist;
d) Sicherungsmittel (44, 78), um die zumindest eine erste und die zumindest eine zweite Schicht aneinander zu sichern;
e) eine zweite Schicht (48, 76) aus Bindeharz;
f) eine Schicht (50, 79) aus gasundurchlässigem Material, wobei die zweite Schicht (48,76) aus Bindeharz die Schicht (50, 79) aus gasundurchlässigem Material an die zumindest eine zweite Schicht (46, 70) aus hochfestem gewobenem Material bindet;
g) eine Schicht (54, 80) aus ultraviolettstrahlungs- und windbeständigem Material; und
h) eine dritte Schicht (52, 82) aus Harz, das die Schicht (54, 80) aus ultraviolettstrahlungs- und windbeständigem Material an das gasundurchlässige Material (50, 79) bindet, wobei die freiliegende Außenseite durch die UV-beständige Schicht (54, 80) gebildet ist.

2. Flexibles laminiertes Material wie beansprucht, worin die ersten, zweiten und dritten Schichten aus Bindeharz Polyurethanharz sind.

3. Flexibles laminiertes Material nach Anspruch 1 oder 2 , worin das Sicherungsmittel (44), um die zumindest eine erste und die zumindest eine zweite Schicht aus gewobenem Material zu verbinden, ein Polyurethanharz ist.

4. Flexibles laminiertes Material nach Anspruch 1 oder 2, worin das Sicherungsmittel (78), um die zumindest eine erste und die zumindest eine zweite Schicht aus gewobenem Material zu verbinden, Nähen ist.

5. Flexibles laminiertes Material nach Anspruch 1 oder 2, worin das Sicherungsmittel (78), um die zumindest eine erste und die zumindest eine zweite Schicht aus gewobenem Material zu verbinden, Stricken ist.

6. Flexibles laminiertes Material nach einem der vorhergehenden Ansprüche, worin die zumindest eine erste Schicht aus gewobenem Material (42, 70) eine Faser ist, die aus der Gruppe herausgenommen ist, die aus schmelzgesponnenen und lösungsmittelgesponnenen Fasern besteht.

7. Flexibles laminiertes Material nach einem der vorhergehenden Ansprüche, worin das gasundurchlässige Material ein Polyesterterephthalat ist.

8. Flexibles laminiertes Material nach einem der vorhergehenden Ansprüche, worin die ultraviolettstrahlungs- und windbeständige Materialschicht (54,80) Polyvinylfluorid ist.

9. Flexibles laminiertes Material nach Anspruch 6, worin die schmelzgesponnenen oder lösungsmittelgesponnenen Fasern Polyesterpolyacrylat bzw. aromatische Polyaramidfasern sind.

## Revendications

1. Matériau de paroi à haute résistance en couches souple, résistant à la déchirure, imperméable aux gaz, résistant aux rayonnements ultraviolets et au vent (20, 60) pour des véhicules plus légers que l'air et similaire, le matériau comportant des surfaces exposées intérieure et extérieure et· comprenant de multiples couches liées entre lesdites surfaces exposées intérieure et extérieure, le matériau comprenant :
a) une première couche de résine de liaison (40, 61) réalisant ladite surface exposée intérieure ;
b) au moins une première couche de matériau (42, 70) ayant des brins individuels à 0° et 90° liés à ladite première couche de résine de liaison (40, 61) ;
c) au moins une deuxième couche (46, 70) de matériau ayant des brins individuels à plus ou moins 45°, ladite au moins une deuxième couche (46, 70) ayant une valeur de déformation à la rupture supérieure à celle de ladite au moins une première couche (42, 70) ;
d) des moyens de fixation (44, 78) pour fixer lesdites au moins une première et au moins une deuxième couches l'une à l'autre ;
e) une deuxième couche (48, 76) de résine de liaison ;
f) une couche (50, 79) de matériau imperméable aux gaz, ladite deuxième couche (48, 76) de résine de liaison liant ladite couche (50, 79) de matériau imperméable aux gaz à ladite au moins une deuxième couche (46, 70) de matériau à haute résistance ;
g) une couche (54, 80) de matériau résistant aux rayonnements ultraviolets et au vent ; et
h) une troisième couche (52, 82) de résine liant ladite couche (54, 80) de matériau résistant aux rayonnements ultraviolets et au vent audit matériau imperméable aux gaz (50, 79), ladite surface exposée extérieure étant réalisée par la couche résistant aux rayonnements ultraviolets (54, 80).

2. Matériau en couches souple selon la revendication 1, dans lequel lesdites première, deuxième et troisième couches de résine de liaison consistent en de la résine de polyuréthane.

3. Matériau en couches souple selon la revendication 1 ou 2, dans lequel lesdits moyens de fixation (44) pour lier ladite au moins une première et ladite au moins une deuxième couches de matériau tissé consistent en une résine de polyuréthane.

4. Matériau en couches souple selon la revendication 1 ou 2, dans lequel lesdits moyens de fixation (78) pour lier ladite au moins une première et ladite au moins une deuxième couches de matériau tissé consistent en une couture.

5. Matériau en couches souple selon la revendication 1 ou 2, dans lequel lesdits moyens de fixation (78) pour lier ladite au moins une première et ladite au moins une deuxième couches de matériau tissé consistent en un tricotage.

6. Matériau en couches souple selon l'une quelconque des revendications précédentes, dans lequel ladite au moins une première couche de matériau tissé (42, 70) consiste en une fibre prise dans le groupe consistant en des fibres filées par fusion et filées avec solvant.

7. Matériau en couches souple selon l'une quelconque des revendications précédentes, dans lequel ledit matériau imperméable aux gaz consiste en un polyester téréphtalate.

8. Matériau en couches souple selon l'une quelconque des revendications précédentes, dans lequel ladite couche de matériau résistant aux rayonnements ultraviolets et au vent (54, 80) consiste en du polyfluorure de vinyle.

9. Matériau en couches souple selon la revendication 6, dans lequel lesdites fibres filées par fusion ou filées avec solvant sont, respectivement, des fibres de polyester polyacrylate et de polyamide aromatique.
